# EUROPEAN PATENT SPECIFICATION

(11) **EP 1 388 990 B1**
(45) Date of publication and mention of the grant of the patent: **11.04.2007**
(21) Application number: 03017946.9
(22) Date of filing: 06.08.2003
(51) Int. Cl.: H04L 29/06

(54) **Secure transfer of digital tokens**
Sichere Übertragung digitaler Wertmarken
Transmission sécurisée de jetons digitaux

(30) Priority: 07.08.2002 SG 200204781
(43) Date of publication of application: 11.02.2004
(73) Proprietor: Mobilastic Technologies Pte Ltd, Singapore 268064 (SG)
(72) Inventor: Goh, Cheh Ngee, Singapore 268064 (SG)
(74) Representative: Franzolin, Luigi

(56) References cited:
- US-A- 6 128 391
- FERREIRA R C: "THE SMART CARD: A HIGH SECURITY TOOL IN EDP" PHILIPS TELECOMMUNICATION REVIEW, PHILIPS TELECOMMUNICATIE INDUSTRIE N.V. HILVERSUM, NL, vol. 47, no. 3, 1 September 1989 (1989-09-01), pages 1-19, XP000072642
- CLEMONS E K ET AL: "Reengineering money: the Mondex stored value card and beyond" SYSTEM SCIENCES, 1996., PROCEEDINGS OF THE TWENTY-NINTH HAWAII INTERNATIONAL CONFERENCE ON, WAILEA, HI, USA 3-6 JAN. 1996, LOS ALAMITOS, CA, USA,IEEE COMPUT. SOC, US, 3 January 1996 (1996-01-03), pages 254-261, XP010156838 ISBN: 0-8186-7426-1

## Description

### Field of the Invention

The present invention relates to a system for securely transferring digital tokens by electronic means and a method for conducting the same.

### Background of the Invention

There are several well known problems associated with the use of bank notes and coins. These include eluminess, lack of longevity, forgery, transportation and protection costs, and an inability to transfer directly from person to person by electronic means. It is anticipated that digital token will have a significant role in the future provided that security issues can be sufficiently addressed.

Some attempts have been made to provide digital token such as the Mondex scheme trialled in Swindon in the United Kingdom. This method used a classical asymmetrical encryption key. The sender of the electronic digital token encrypts a message with a public key, and the receiver recovers the digital token transfer message by decrypting with a private key.

In this trial the value of money is represented as a combination of numerical value, currency type, a serial number and other administrative information. This representation was protected so that its intended monetary value is maintained, and its replication can be prevented. This was achieved using a combination of two methods. Firstly, a conventional digital signature was used, with a digitally signed token able to be redeemed by the receiver by electronically depositing it with a signing third party who verifies the authenticity of the signature. Secondly, methods were used to ensure the token is never unencrypted outside the secure environment. This environment is usually a tamper resistant enclosure in which the digital token is stored and the means for performing the cryptographic function are housed. Transactions required an exchange of public keys of the respective parties.

This technique suffered from the following. There is a need to know with absolute certainty the public key of the receiving party. In a face in face situation this was relatively straightforward. However it was difficult and uncertain if two transacting parties are far apart. The question of revocation can arise due to compromise of the public key. The Mondex approach is difficult to use and suffers from use same well known problem of any public key infrastructure system. There were also problems with the control of the public/private key pair. Once a person is issued with a publie/private key pair, there is no way of controlling when the keys may or may not be used. One party receives a public key without knowing the validity of the key. The issue of the public/private key pair does not have a way to control when the receiver can use the private key to decrypt. Neither party can specify and enforce when decryption can take place.

Philips Telecommunication Review, Philips Telecommnicatie Industrie N.v. Hilversum, NI (01-09-1989), 47(3), 1-19 discloses a system for securely transfer digital tokens by electronic means, a digital token holder (in the form of a smart card) and a method of exchange of digital tokens having the features included in the preambles of claims 1,9 and 17, respectively.

The present invention seeks to provide a solution that does not suffer from at least one of these disadvantages.

### Brief Description of the Present Invention

It should be understood that throughout this specification the word token is used to mean a representation of something having value. In this context, a token may represent cash, tickets, gift vouchers, reward/loyalty points etc. A token can be a discrete item that may only be exchanged intact, such as a ticket. Alternatively, a token can be an item that is transient and merely representative of the value of the item, such as the amount of currency being transferred.

According to a first aspect of the present invention there is provided a system for securely transferring digital tokens by electronic means, as claimed in claim 1.

According to a second aspect of the present invention there is provided a digital token holder as claimed in claim 9.

Preferably the means for said token holders to communicate within the digital token handling domain is in the form of a digital cashier that resides in each token holder.

Preferably the means for said token holders to communicate outside the digital token handling domain is in the form of a digital cashier that resides within the token holder.

Preferably the means for encrypting and decrypting secure communications is in the form of a control means resident within each token holder.

Preferably each control means operates according to a pre-programmed method of encrypting and decrypting communication to and from the respective digital cashier.

Preferably the control means controls stores digital tokens according to a pre-programmed method based on information encrypted within communications with other token holders and predetermined trusted parties.

Preferably the value of each type of digital token within the secure digital token handling domain remains constant except where digital tokens are added to the secure digital token handling domain by a source predetermined trusted third party or digital tokens are removed from the secure digital token handling domain by a sink trusted third party.

Preferably the one or more trusted authorities provide each token holder with a decryption key for use in decrypting encrypted communication with other token holders.

According to a third aspect of the present invention there is provided a method of exchange of digital tokens as claimed in claim 17.

Preferably where the digital token is for the transfer of a currency, the token including an amount of currency transferred, wherein transfer of the digital token according to the encrypted message includes adding the amount to a store of currency in the second token holder.

Preferably the DTH1 is provided with an identification ID1. Preferably DTH2 is provided with an identification ID2.

Preferably the first public key includes or is derived from a temporal value.

Preferably the second public key includes or is derived from a temporal value.

Preferably the method includes the step of providing the DTH2 with a symmetrical encryption key capable of encrypting a message that can be decrypted using the symmetrical encryption key or a decryption key derived from the symmetrical key hereinafter symmetrical decryption key). Preferably the symmetrical encryption key is permanently stored in the DTH2. Alternatively, the symmetrical encryption key is generated by DTH2. Preferably the symmetrical decryption key is permanently stored in DTH2. Alternatively, the symmetrical decryption key is generated by DTH2.

Preferably the method includes the step of DTH1 providing DTH2 with ID1.

Preferably the method further includes the step of DTH2 encrypting the symmetrical encryption key and ID2 using a public key derived from ID1 to provide a first encrypted message. More preferably the public key is also derived from a temporal value.

Preferably DTH2 provides DTH1 with the first encrypted message. Preferably the method further includes the step of DTH1 using the first private key to decrypt the first encrypted message to obtain the symmetrical encryption key and ID2.

Preferably DTH1 displays ID2 and the amount of token to be transferred to DTH2. Preferably DTH1 receives confirmation to proceed with the transfer of the digital token. Preferably the digital token is encrypted with a public key derived from ID2. More preferably the public key is also derived from a temporal value.

Preferably the description key is used to decrypt the encrypted message sent from DTH1 to DTH2 to obtain a second encrypted message. Preferably DTH2 uses the symmetrical description key to decrypt the second encrypted message to obtain the digital token to be transferred.

Preferably DTH2 displays the information contained in digital token transferred. Preferably DTH2 acknowledges receipt of the digital token to DTH1. Preferably DTH1 displays the receipt.

### Detailed Description of Preferred Embodiments

In order to provide a better understanding of the present invention, preferred embodiments will now be described in greater detail, by way of example only, with reference to the accompanying drawings, in which :
Figure 1 is a schematic representation of a system for securely transferring digital tokens by electronic means according to a preferred form of the present invention;
Figure 2 is a schematic representation of a digital token holder shown interacting with other components of the system of Figure 1;
Figure 3 is a schematic diagram showing exchange of encrypted messages between tokens holders according to a preferred form of the method of the present invention.

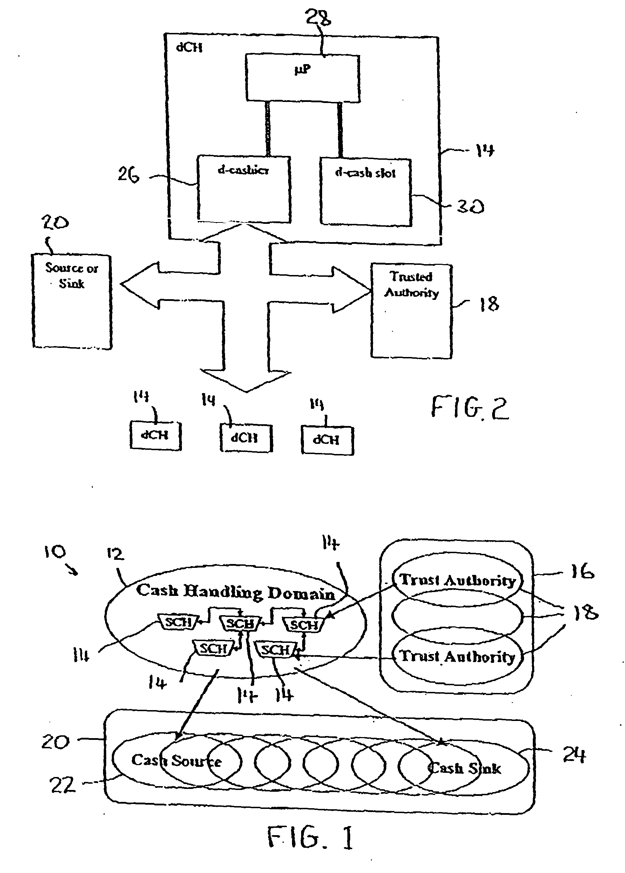

Referring to Figure 1, there is shown a system 10 for securely transferring digital tokens by electronic means. The system 10 includes a secure token handling domain 12, one or more trusted authorities 16 and one or more trusted third parties 20. Trusted authorities 16 are also trusted third parties The token handling domain 12 includes a plurality of secure tamper resistant electronic token holders 14. In Figure 1 there are a plurality of trusted authorities 18. The trusted third parties 20 include at least one token source 22 and at least one token sink 24.

The token handling domain 12 is configured to enable digital tokens to be passed only between token holders 14 within the token handling domain 12. Thus, subject to the exception described below, the number or value of each type of digital token remains constant. Where the digital token represents a currency, the amount of tokens within the token handling domain 12 remains constant. The only manner in which a token is added to or removed from the token handling domain 12 is by one of the trusted third parties 20. If a person wishes to add money to the pool of funds in their token holder 14, it is taken from a conventional money source and added to their token holder 14 within the token handling domain 12 through one of the token sources 22, such as a machine similar to an Automatic Teller Machine. Likewise cash is removed from the token handling domain 12 by removing it from one of the token holders 14, it is provided to a token sink 24 where it is converted to a conventional form, such as cash or an electronic deposit into a bank account. If a person purchases a digital ticket from an electronic ticket vendor, the number of tickets of the type purchased remains constant within a new token handling domain 12 until a new ticket is purchased and transferred to one of the token holders 14.

Referring to Figure 2, a secure digital token holder 14 is described in more detail. The token holder 14 includes a digital cashier 26 for interfacing with other token holders 14 within the token handling domain 12 or trusted third parties 20 or a trusted authority 18. The token holder 14 also includes a token slot 30 for holding digital tokens. The token slot 30 may also hold one or more encryption/decryption keys. Alternatively the keys may be stored in another secure memory of the token holder.

The token slot 30 may be, for example, non volatile memory with error correction. The digital cashier 26 and token slot 30 are controlled by a control means 28 in the form of a microprocessor. The microprocessor encrypts and decrypts the communications of the digital cashier 26. The control means 28 controls the digital tokens stored in the token slot 30 according to a pre-programmed method involving encrypted communication with other token holders 14 within the digital token domain 12 and pre-determined trusted third parties 16 or 20 to ensure secure exchange of digital tokens. The digital token bolder 14 is made physically tamper resistant so as to reduce the possibility of interference and fraud occurring.

The token holder 14 may be in the form of a mobile/cellular telephone SIM card with the telephone that the SIM card is within acting as an interface between the user and the token holder 14. The telephone may also provide the communication means between the digital cashier 26 and other the token holders 14. Alternatively the telephone could function as the cashier 26. The digital token holder 14 may take some other suitable form, such as for example a key ring.

The transfer of information between the token holders 14 will preferably use a wireless communication such as the infra-red communication or radio frequency communication such as using the Bluetooth standard. Alternatively it may be modulated communicate over a telephone network, including a mobile/cellular network.

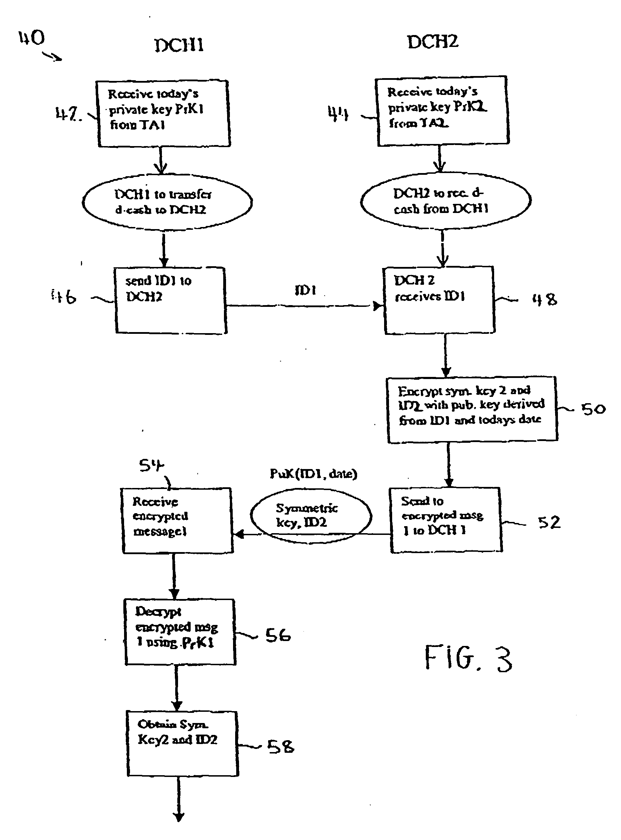

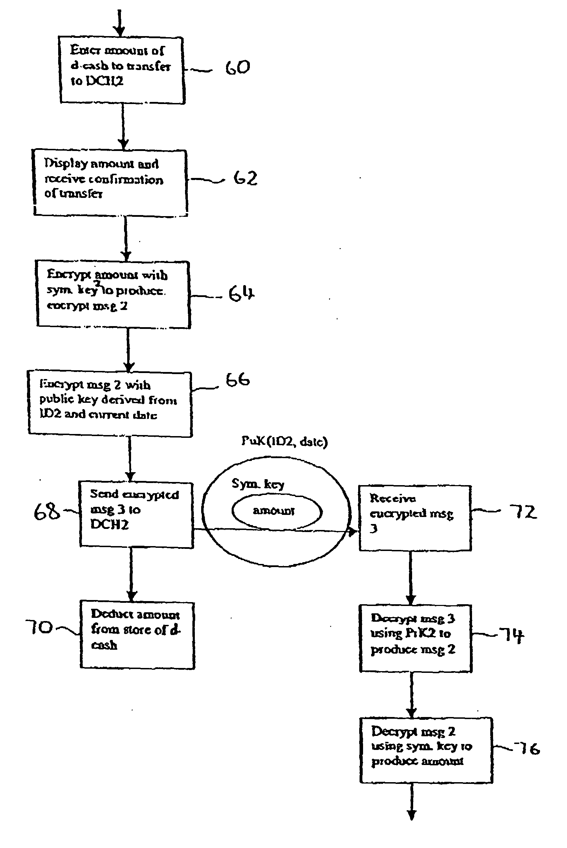

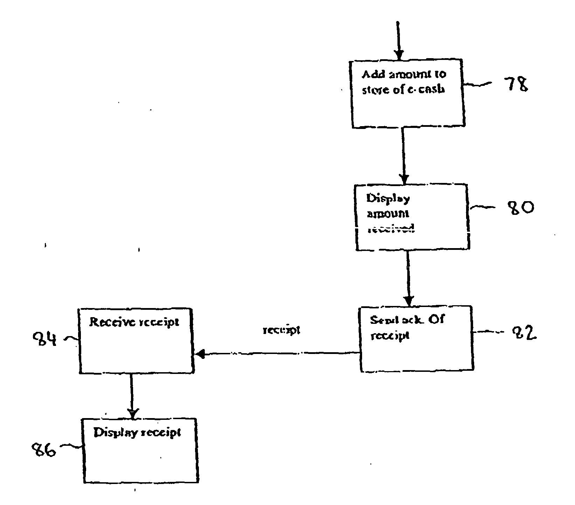

Figure 3 (spanning 3 pages) shows a method 40 for the exchange of digital tokens in the form of digital cash between a first cash/token holder (DTH1) and a second cash/token holder (DTH2).

Each digital cash holder, DCH1 and DCH2, receives a respective private key PrK1 and PrK2, specific to that digital cash holder from a respective trusted authority TA1 and TA2, respectively. Each cash holder has a respective identification, ID1 and ID2. The private keys, PrK1 and PrK2 are derived from the respective identification, ID1 and ID2 of the cash holders DCH1 and DCH2 and a temporal value such as the current date. Steps 42 and 44 show the respective cash holder DCH1 and DCH2 receiving today's private key PrK1 and PrK2, respectively, from the respective trusted authority TA1 and TA2. Each of the cash holders store the respective private key PrK1 and PrK2 for the duration of the day or other period of time or until a new private key is sent from the respective trusted authority. The method of providing the private key may be for example; on powering up of the cash holder, communication is established with its respective trusted authority, whereupon it downloads and stores the private key. It is preferred that the communication for the downloading of the private key is encrypted. This may be for example by the trusted authority using a public key to encrypt the private key PrK1 or PrK2, the encrypted private key then being sent to the respective cash holder, whereupon it is decrypted using a fixed private key held within the respective token holder.

When the respective owners of the cash handlers DCH1 and DCH2 agree upon a transaction involving the transfer of an amount of digital token from the cash holder DCH1 to the cash holder DCH2 the process of Figure 3 continues from step 46. At step 46 DCH1 sends its identification ID1 to DCH2. At step 48 DCH2 receives ID1. It is not essential that ID1 be encrypted, although it is preferred that at least a basic level of encryption be used. This may be for example to use a public key and private key set common to all digital cash handlers within the cash handling domain 12. In addition to the cash holder's identification, the name of the respective trusted authority may be provided.

Each cash holder can generate or has stored a symmetrical encryption key and symmetrical decryption key. The symmetrical decryption key is the same as or is derived from the symmetrical encryption key. The symmetrical keys may be fixed for each holder or may be generated each time a symmetrical key set is required. At step 50 the symmetrical encryption key (Sym.Key2) and the identification of DCH2, ID2 are encrypted using a public key derived from the identification of DCH1, ID1 and the current date to form a first encrypted message (MSG1). At step 52 the first encrypted message. MSG1 is sent to the first cash holder DCH1. The public key derived from ID1 and today's date is written as PuK (ID1, date).

At step 54, the first cash holder DCH1 receives the first encrypted message MSG1. At step 56 DCH1 decrypts the first encrypted message using private key PrK1 to obtain, at step 58, the symmetrical key, Sym.Key2 and the identification of DCH2, ID2.

At step 60 the user of DCH1 enters the amount of digital cash to be transferred to the second cash holder DCH2, such as by keying the amount into a key pad of DCH1. This step may occur earlier in the process, such as prior to step 46. At step 62, the amount of digital cash entered is displayed to the user to receive confirmation of the transfer. Confirmation may simply be in the form of pressing an OK button or may involve the entry of a personal identification number. Once a confirmation of the transfer is received the first token holder, DCH1 encrypts the amount using the symmetrical key Sym.Key2 obtained from the second cash holder, to produce a second encrypted message (MSG2) at step 64.

The second encrypted message MSG2 is then encrypted using a public key derived from ID2 and the current date (PuK (ID2), date)), at step 66, to produce a third encrypted message MSG3.

At step 68 the third encrypted message MSO3 is sent to a second cash holder DCH2. At step 70, the amount is deducted from the store of digital token within the d-cash slot 30.

Second cash holder DCH2 receives the third encrypted message MSG3 at step 72. The second cash handler decrypts the message MSG3 using second cash holder's private key PrK2 to produce the second encrypted message MSG2 at step 74. The private key may be deleted if the system is configured to download a new private key every time it is used (or as determined). This way private keys are only used once, which provided added security. A private key may not be destroyed immediately upon receipt of a new key, but may be stored for a period of time. This can avoid problems caused by instantaneous key destruction and communication failures.

At step 76, the second encrypted message MSG2 is decrypted using the second symmetrical key or second symmetrical decryption key to produce the amount. Now that the amount has been received by DCH2 this amount can be added to the store of digital cash kept in DCH2's d-token slot at step 78. The amount of token received is displayed to the user at 80 to confirm that the transfer of d-cash has occurred. Preferably the second cash handler DCH2 sends an acknowledgment of the receipt at step 82. The receipt may be encrypted using the same level of encryption as transfer of ID1 from DCH1 to DCH2. The receipt is received at step 84 and displayed by DCH1 at step 86. Optionally the amount of d-cash transferred may only be deducted from the store of e-cash once the receipt has been received.

Variations on this procedure may occur. A first variation may be where the user of DCH2 enters the amount in a "please pay me this amount request". The procedure is substantially the same with the differences being listed as follows. DCH2 may initiate the process by asking for the ID of DCH1. The process then proceeds with step 46. At step 50 the amount may be encrypted within the first encrypted message along with Sym.Key2 and ID2. Step 60 is therefore not required as the amount has been sent by DCH2, although the confirmation of the transfer of the amount is still required at step 62. The process then continues as described above.

Another variation may be where it is desired to asynchronously send token from DCH1 to DCH2. This procedure occurs as follows. The identification of DCH2 must be known to the user of DCH1. This may be, for example, in the form of a mobile phone number if the cash handler is in the form of a mobile telephone. Steps 46 to 58 are omitted from the process. At step 60 in addition to the entry of the amount of d-cash to transfer to DCH2 the identification of DCH2. ID2 will have to either be entered by the user or, for example, recalled from the telephone or SIM card's memory. Step 64 is omitted in this process, as is step 76. Step 74 is varied in that the message sent from DCH1 is decrypted using PrK2 to produce the amount as the symmetrical key is not used in this process. The transfer of information in this manner may occur by text transfer, such as using short message service (SMS).

The method of deriving the identity specific private key (PrK1 and PrK2) and public key PuK1 and PuK2 may be, for example, are derived from the token holder's identification use the algorithm/method described in the identity directory-less public key cryptographic system described in UK Patent Application GB2370471. A description of this (IDPKC) is also provided at the URL www.cesg.gov.uk/technology/id-pkc/. This cryptography method allows for the generation of the cash holder (identity) specific private key by the trusted authorities and the public key derived from a cash holder identification and the current date by the cash holder. Another identity based encryption method that may be used is described at the URL http://crypto-stanford.edu/ibe/.

The exchange of digital tokens other than cash is similar to the method outlined above. Where the tokens are non-cash currencies such as air mileage points, loyalty or reward points, redemption points, bonus points, etc. the manner is identical to handling cash except instead of amounts of cash being exchanged amounts of points are being exchanged. Where a digital token holder is capable of storing more than one type of token, a record of each type of token is stored against or within the token so that for example, loyalty points are not added to cash. In addition, where the currencies are different national currencies, such as for example US dollars and Singapore dollars, these forms of currency are kept separate by using an identifier identifying the type of token, ic. US dollar cash and Singapore dollar cash.

Where the tokens are tickets, gift vouchers etc. that are discrete items that can only be exchanged intact, again the method is similar to those outlined above, with the exception that each digital token is kept separate from other digital tokens so that the value of each token is discrete and intact.

It may bo desirable for each token to contain a digital signature so that the authenticity of the item represented by the token can be verified when it is exchanged at a token sink for the item it represents. Furthermore, when a digital token is transferred to a second digital token holder, it may be desirable to look inside the token so that the user of the second digital token holder can confirm what the token represents It may also be desirable to protect the digital token from damage interference, in which case a fixed symmetrical key may be stored within each digital token holder in a tamper resistant manner so that the contents of each token can be encrypted. A hash can be taken of the encrypted token and kept in the hardware. The encrypted version of the token can then be stored anywhere inside the cash holder or left with a service provider. When the encrypted token is retrieved and transferred out of the token holder the hash of the encrypted token can be matched against the record stored in the token holder as proof of authenticity. The hash record will then be removed when the digital token is transferred out. Should there be any replication of the encrypted digital token the replication is sent to the same digital cash holder, the replication will not be considered valid due to its hash not being there anymore.

The authenticity of a token can be checked using its digital signature, where if the digital signature is invalid the token will not be accepted. Upon verification of the authenticity of a token, it is added to the digital token slot. At this point an acknowledgment may be sent confirming that the digital token can be removed from the first digital token holders token slot.

Where a receiver initiated transfer of a digital token occurs, the method is similar to that outlined above. In the place of requesting an amount of digital cash, the second digital token holder requests a specific digital token. The first digital token holder looks up a list of tokens its possesses and finds the appropriate digital token and requests confirmation of the transfer of the token. The rest of the procedure is the same with the amount of digital cash being transferred substituted with the token.

This process can be further enhanced by the sender rendering the token invalid by damaging data contained within the digital token, such as by modification of the digital signature. If the damage is conducted in a known manner, the validity of the token can still be assessed but it can also be determined that it has been handed over/used. If, for example, the token is used as entrance to an event, the damaged digital token can be used to allow re-entry into the event without having to pass a new entry token to the person leaving. Once the event is over the entire digital token can be deleted.

Where a token is valid for multiple redemptions, it can be represented as a number of single use digital tokens. In this case the redemption process is identical to that of a single token.

Conditions associated with the token can be represented as information in accompanying the token. For example, if a season ticket is represented then the digital token can include an appropriate accompanying condition. Other conditions might include a digital token that is non-transferable, a digital token that represents single entry for a group of people, or a digital token with conditions on the entrants such as age, membership or some other qualification of the token holder etc.

The digital token with an associated set of conditions, can represent the conditions as additional data, for example, using XML, RDF or simply name and value pairs.

In the simplest case, where the condition is attached to the identity of the token owner, the token will include a representation of the requirement prior to digital signing. For example, non-transferable condition may be represented by the inclusion of the identity of the digital token holder. Before token transfer can take place, a check is conducted to ascertain the token transferability. Only the digital token holder with a correct identity or a special redemption device (such as a specific digital token sink) is allowed to accept the transfer.

When the condition relates to attributes of the owner of the token, then it will be necessary for the owner to show the redeemer a digitally signed attribute certificate or a physical equivalent to prove satisfaction of the conditions. For example, a digitally signed age certificate may be provided if the token represents entrance to an event which is restricted by age. Alternatively the token holder may show their drivers licence or some other form of physical identification to satisfy this requirement.

This may result in some digital tokens not being able to be transferred within the secure digital token environment and only from a token source to a token sink.

When the condition relates to the time and place of redemption, then additional functionality can be included for the digital token holder to check the validity of redemption in collaboration with the redeeming token sink.

An example of a sequence of events for a token to go from token holder one to token holder two to gain entrance to an event is provided below:
- DTH2 sends a request for a specific digital token T.
- DTH1 receives the request and looks up the list of tokens it possesses and finds the appropriate digital token T.
- The user of DTH1 confirms both the token to be transferred and the recipient of the token.
- Using the public encryption key derived from DTH2's ID2 and the current date the token is encrypted, which is represented as PB(ID2 date) (T).
- When DTH2 receives the encrypted token it will send a request Q for the necessary attributes of the digital token owner using public encryption key derived from the identification of DTH1, ID1, and the current date. Optionally, DTH2 could first encrypt the request within symmetric key so that the answer can be encrypted with the symmetric key so that it remains confidential.
- Having received the encrypted message from DTH2, DTH1 sends the requested information to DTH2. If the symmetric key is included, DTH1 can use his key to encrypt the requested information and send it encrypted back to DTH2. When the conditions are verified the digital token is redeemed.

if the request made physical proof to chow the attribute of the user of DTH1, then the request and response can take the form of inspection of a document by a person or a machine scanning a magnetic strip of a card or smart card reader reading the information within a smart card or so forth.

Modifications and variations may be made to the present invention without departing from the basic inventive concept. Such modification may include the timing of receiving the private key from the trusted authority. Rather than it being downloaded at the start of the day or upon power-up of the token holder, it may be downloaded as and when required and/or at predetermined intervals.

Such modifications and variations are intended to be included within the concept of the present invention, the nature of which is to be determined from the foregoing description and appended claims.

## Claims

1. A system for securely transferring digital tokens by electronic means, the system comprising:
a secure digital token handling domain (12) comprising a plurality of tamper-resistant electronic token holders (DCH1, DCH2) each token holder having the ability to process and store information relating to the transfer of digital tokens ;
means (26) for said token holders (DCH1, DCH2) to communicate within the digital token handling domain (21) only with other token holders,
means (26) for said token holders (DCH1, DCH2) to communicate outside the digital token handling domain (12) only with predetermined trusted third parties (18, 20), including one or more trusted authorities (18) responsible the administration of encryption matters;
means (28) for encrypting and decrypting secure communications between token holders (DCH1, DCH2) within the digital token handling domain (12) and between token holders and the predetermined third parties (18, 20);
whereby in use digital token transfers can be securely performed within the digital token handling domain (12); **characterised in that** each of said token holders (DCH1, DCH2) has a unique identification (ID1, ID2) and is provided with a private key (Prk1, Prk2), correlated to the identification of the respective token holder (DCH1, DCH2) and capable of decrypting a message encrypted with a public key derived from the identification (ID1, ID2) of the respective token holder (DCH1, DCH2) and generated by another token holder.

2. A system according to claim 1, wherein the means (26) for said token holders (DCH1, DCH2) to communicate within the digital token handling domain (12) is in the form of a digital cashier that resides in each token holder.

3. A system according to either claim 1 or 2, wherein the means (26) for said token holders (DCH1, DCH2) to communicate outside the digital token handling domain (12) is in the form of a digital cashier that resides within the token holder.

4. A system according to any one of claim 1 to 3, wherein the means (28) for encrypting and decrypting secure communications is in the form of a control means resident within each token holder.

5. A system according to claim 4, wherein each control means operates according to a pre-programmed method of encrypting and decrypting communication to and from the respective digital cashier.

6. A system according to claim 4, wherein the control means control stores digital token according to a pre-programmed method based on information encrypted within communications with other token holders and predetermined trusted parties

7. A system according to any one of claims 1 to 6 wherein the amount of digital token within the secure digital token handling domain (12) remains constant except where digital token is added to the secure digital token handing domain (12) by a source predetermined trusted third party (21) or digital token is removed from the secure digital token handling domain by a sink trusted third party (24).

8. A system according to claim 7, wherein the one or more trusted authorities provide each token holder with a decryption key for use in decrypting encrypted communication with other token holders.

9. A digital token holder comprising at least:
a tamper-resistant store (30) for storing digital tokens ;
communication means (26) for enabling communication within a digital token handling domain (12) only with one or more other token holders for the transfer of digital token to one of said other token holders,
communication means (26) for enabling communication outside the digital token handling domain (12) only with predetermined trusted third parties (18, 20) including communication for receipt of a decryption key;
means (28) for encrypting and decrypting secure communications with token holders (DCH1, DCH2) within the digital token handling domain (12), and with the predetermined third parties (18, 20);
control means for controlling the store of digital tokens according to a pre-programmed method of encrypted communication with other token holders (DCH1, DCH2) within the digital token handling domain (12) and predetermined trusted third parties (18, 20) to ensure secure exchange of digital tokens; **characterised in that** it has a unique identification (ID1, ID2) and is provided with a private key (Prk1, Prk2) correlated to the identification and capable of decrypting a message encrypted with a public key derived from the identification (ID1, ID2) of the token holder and generated by another token holder.

10. A digital token holder according to claim 9, wherein the means (26) for said token holders (DCH1, DCH2) to communicate within the digital token handing domain (12), is in the form of a digital cashier that resides in each token holder.

11. A digital token holder according to either claim 9 or 10, wherein the means (26), for said token holders (DCH1, DCH2) to communicate outside the digital token handling domain (12) is in the form of a digital cashier that resides within the token holder.

12. A digital token holder according to any one of claims 9 to 11, wherein the means (28) for encrypting and decrypting secure communications is in the form of a control means resident within each token holder.

13. A digital token holder according to claim 12, wherein each control means operates according to a pre-programmed method of encrypting and decrypting communication to and from the respective digital cashier.

14. A digital token holder according to claim 12, wherein the control means controls stores digital token according to a pre-programmed method based on information encrypted within communications with other taken holders and predetermined trusted parties.

15. A digital token holder according to any one of claims 11 to 14, wherein the amount of digital token within the secure digital token handling domain (12) remains constant except where digital token is added to the secure digital token handling domain by a source predetermined trusted third party (22) or digital token is removed from the secure digital token handling domain by a sink trusted third party (24).

16. A digital token holder according to claim 15, wherein the one or more trusted authorities (18) provide the token holder (DCH1, DCH2) with a decryption key for use in decrypting encrypted communication with other token holders.

17. A method of exchanges of digital tokens including the steps of:
providing a secure digital token handling domain (12) comprising a plurality of tamper-resistant electronic token holders (DTH1, DTH2) each token holder-having the ability to process and store information relating to the transfer of digital token;
each of the token holders communicating with a corresponding predetermined trusted third party (18) to obtain a decryption key;
a first of the token holders (DTH1) communicating with a second of the token holders (DTH2) by an exchange of one or more encrypted messages, wherein the respective decryption key obtained by the first and second token holder enables decryption of the encrypted message sent by the other token holder, wherein one of the encrypted messages includes an amount of digital token to be transferred from the first token holder to the second token holder
transferring the amount of digital token according to the encrypted message including the amount; **characterised in that** it
further includes the step of a first trusted authority providing the DTH1 with a first private key (Prk1), correlated with an identification ID1 of the DTH1 and capable of decrypting a message encrypted with a public key derived from the identification ID1 of the DTH1 and generated by the DTH2, and providing the DTH2 with a second private key (PrK2), correlated to an identification ID2 of the DTH2 and capable of decrypting a message encrypted with a public key derived from the identification ID2 of the DTH2 and generated by the DTH1.

18. A method according to claim 17, wherein the first private key (Prk1) is capable of decrypting a message encrypted with public key derived from ID1 and a temporal value.

19. A method according to claim 17, wherein the second private key (Prk2) is capable of decrypting a message encrypted with a public key derived from ID2 and a temporal value.

20. A method according to any one of claims 17 to 19, wherein the method includes the step or providing the DTH2 with a symmetrical key capable of encrypting a message that can be decrypted using the symmetrical key or a decryption key derived from the symmetrical key (hereinafter symmetrical decryption key).

21. A method according to claim 20, wherein the symmetrical key is permanently stored in DTH2.

22. A method according to claim 20, wherein the symmetrical key is generated by DTH2.

23. A method according to either claim 21 or 22, wherein the symmetrical decryption key is permanently stored in the token holder (DCH1, DCH2).

24. A method according to either claim 21 or 22, wherein the symmetrical decryption key is generated by DTDH2.

25. A method according to any one of claims 17 to 24, wherein the method includes the step of DTH1 providing DTH2 with ID1.

26. A method according to any one of claims 17 to 25, wherein the method further includes the step of DTH2 encrypting the symmetrical key ID2 using a public key derived from ID1 to provide a first encrypted message.

27. A method according to claim 26, wherein the public key is also derived from a temporal value.

28. A method according to either 26 or 27, wherein DTH2 provides DTH1 with the first encrypted message.

29. A method according to claim 28, wherein the method further includes the step of DTH1 using the first private key (Prk1) to decrypt the first encrypted message to obtain the symmetrical key and ID2.

30. A method according to claim 29, wherein DTH1 displays ID2 and the amount of token to be transferred to DTH2.

31. A method according to claim 30, wherein DTH1 receives confirmation to proceed with the transfer of the amount of digital token.

32. A method according to claim 31, wherein the amount of digital token is encrypted with a public key derived from ID2.

33. A method according to claim 32, wherein the public key is also derived from a temporal value.

34. A method according to claim 33, wherein the decryption key is used to decrypt the encrypted message sent from DTH1 to DTH2 to DTH2 to obtain a second encrypted message.

35. A method according to claim 34, wherein DTH2 uses the symmetrical decryption key to decrypt the second encrypted message to obtain the digital token to be transferred.

36. A method according to claim 35, wherein DTH2 displays the amount of digital token transferred.

37. A method according to either claim 35 or 36, DTH2 acknowledges receipt of the digital token to DTH1.

38. A method according to claim 37, wherein DTH1 displays the receipt.

39. A method according to any one of claims 17 to 38, wherein the digital token (DCH1, DCH2) is for the transfer of a currency, the token including an amount of currency transferred, wherein transfer of the digital token according to the encrypted message includes adding the amount to a store of currency in the second token holder and deducting the amount from a store of currency in the first token holder.

## Patentansprüche

1. Ein System zur sicheren Übermittlung digitaler Werteinheiten durch elektronische Mittel, umfassend:
einen sicheren digitalen Werteinheit-Handhabungsbereich (12), umfassend eine Vielzahl von manipulationssicheren elektronischen Werteinheitträgern (DCH1, DCH2), jeder Werteinheitträger hat die Fähigkeit Informationen bezüglich des Transfers von digitalen Werteinheiten zu bearbeiten und zu speichern;
Mittel (26) für die Werteinheitträger (DCH1, DCH2) zum Kommunizieren innerhalb des digitalen Werteinheit-Handhabungsbereichs (12) nur mit anderen Werteinheitträgern;
Mittel (26) für die Werteinheitträger (DCH1, DCH2) zum Kommunizieren außerhalb des digitalen Werteinheit-Handhabungsbereichs (12) nur mit vorbestimmten vertrauenswürdigen Dritten (18, 20), mit einer oder mehrerer vertrauenswürdiger Autoritäten (18), verantwortlich für die Administration von Verschlüsselungsangelegenheiten;
Mittel (28) zur Verschlüsselung und Entschlüsselung sicherer Kommunikationen zwischen Werteinheitträgern (DCH1, DCH2) innerhalb des digitalen Werteinheit-Handhabungsbereichs (12) und zwischen Werteinheitträgern und den vorbestimmten Dritten (18, 20);
wodurch bei Verwendung die digitalen Werteinheit-Übermittlungen sicher innerhalb des digitalen Werteinheit-Handhabungsbereichs (12) durchgeführt werden können,
**dadurch gekennzeichnet, dass**
jeder der Werteinheitträger (DCH1, DCH2) eine einmalige Identifikation (ID1, ID2) hat und mit einem vertraulichen Schlüssel (Prk1, Prk2) ausgestattet ist, korreliert zu der Identifikation von dem entsprechenden Werteinheitträger (DCH1, DCH2) und fähig zum Entschlüsseln einer mit einem öffentlichen Schlüssel verschlüsselten Nachricht, abgeleitet von der Identifikation (ID1, ID2) von dem entsprechenden Werteinheitträger (DCH1, DCH2) und durch einen anderen Werteinheitträger generiert.

2. Ein System nach Anspruch 1, worin die Mittel (26) für die Werteinheitträger (DCH1, DCH2) zum Kommunizieren innerhalb des digitalen Werteinheit-Handhabungsbereichs (12) in der Form eines digitalen Kassierers ist, das sich in jedem Werteinheitträger befindet.

3. Ein System nach Anspruch 1 oder 2, worin die Mittel (26) für die Werteinheitträger (DCH1, DCH2) zum Kommunizieren außerhalb des digitalen Werteinheit-Handhabungsbereichs (12) in der Form eines digitalen Kassierers ist, das sich innerhalb des Werteinheitträgers befindet.

4. Ein System nach einem der Ansprüche 1 bis 3, worin die Mittel (28) zum Verschlüsseln und Entschlüsseln sicherer Kommunikationen in der Form eines Steuerungsmittels ist, befindlich innerhalb jedes Werteinheitträgers.

5. Ein System nach Anspruch 4, worin jedes Steuerungsmittel gemäß einem vorprogrammierten Verfahren arbeitet, zum Verschlüsseln und Entschlüsseln von Kommunikation zum und von dem entsprechenden digitalen Kassierer.

6. Ein System nach Anspruch 4, worin die Steuerungsmittel Speicher der digitalen Werteinheit steuern, nach einem vorprogrammierten Verfahren, basierend auf innerhalb der Kommunikationen verschlüsselter Informationen mit anderen Werteinheitträgern und vorbestimmten vertrauenswürdigen Dritten.

7. Ein System nach einem der Ansprüche 1 bis 6, worin der Betrag der digitalen Werteinheit innerhalb des sicheren digitalen Werteinheit-Handhabungsbereichs (12) konstant bleibt, ausgenommen wo eine digitale Werteinheit zu dem sicheren digitalen Werteinheit-Handhabungsbereich (12) durch eine Quelle eines vorbestimmten vertrauenswürdigen Dritten (22) hinzugefügt wird, oder die digitale Werteinheit von dem sicheren digitalen Werteinheit-Handhabungsbereich durch eine Senke eines vertrauenswürdigen Dritten (24) entfernt wird.

8. Ein System nach Anspruch 7, worin die eine oder mehrere vertrauenswürdige Autoritäten jeden Werteinheitträger mit einem Entschlüsselungsschlüssel zur Verwendung zum Entschlüsseln verschlüsselter Kommunikation mit anderen Werteinheitträgern versorgt.

9. Ein digitaler Werteinheitträger, zumindest umfassend:
einen manipulationssicheren Speicher (30) zum Speichern digitaler Werteinheiten;
Kommunikationsmittel (26) zum Ermöglichen von Kommunikation innerhalb eines digitalen Werteinheit-Handhabungsbereichs (12) nur mit einem oder mehrerer anderer Werteinheitträger für den Transfer der digitalen Werteinheit zu einem der anderen Werteinheitträgern;
Kommunikationsmittel (26) zum Ermöglichen von Kommunikation au-ßerhalb des digitalen Werteinheit-Handhabungsbereichs (12) nur mit vorbestimmten vertrauenswürdigen Dritten (18, 20), mit Kommunikation zum Empfang von einem Entschlüsselungsschlüssel;
Mittel (28) zum Verschlüsseln und Entschlüsseln sicherer Kommunikationen mit Werteinheitträgern (DCH1, DCH2) innerhalb des digitalen Werteinheit-Handhabungsbereichs (12) und mit den vorbestimmten vertrauenswürdigen Dritten (18, 20);
Steuerungsmittel zum Steuern des Speichers von digitalen Werteinheiten nach einem vorprogrammierten Verfahren von verschlüsselter Kommunikation mit anderen Werteinheitträgern (DCH1, DCH2) innerhalb des digitalen Werteinheit-Handhabungsbereichs (12) und vorbestimmten vertrauenswürdigen Dritten (18, 20) um sicheren Austausch von digitalen Werteinheiten zu gewährleisten;
**dadurch gekennzeichnet, dass**
es eine einmalige Identifikation (ID1, ID2) hat und mit einem vertraulichen Schlüssel (Prk1, Prk2) versorgt ist, korreliert zu der Identifikation und fähig zum Entschlüsseln einer mit einem öffentlichen Schlüssel verschlüsselt Nachricht, abgeleitet von der Identifikation (ID1, ID2) von dem Werteinheitträger und durch einen anderen Werteinheitenträger generiert.

10. Ein digitaler Werteinheitträger nach Anspruch 9, worin die Mittel (26) für die Werteinheitträger (DCH1, DCH2) zum Kommunizieren innerhalb des digitalen Werteinheit-Handhabungsbereichs (12) in der Form eines digitalen Kassierers ist, das sich in jedem Werteinheitträger befindet.

11. Ein digitaler Werteinheitträger nach einem der Ansprüche 9 oder 10, worin die Mittel (26) für die Werteinheitträger (DCH1, DCH2) zum Kommunizieren außerhalb des digitalen Werteinheit-Handhabungsbereichs (12) in der Form eines digitalen Kassierers ist, das sich innerhalb des Werteinheitträgers befindet.

12. Ein digitaler Werteinheitenträger nach einem der Ansprüche 9 bis 11, worin die Mittel (28) zum Verschlüsseln und Entschlüsseln sicherer Kommunikationen in der Form eines Steuerungsmittel ist, befindlich innerhalb jedes Werteinheitträgers.

13. Ein digitaler Werteinheitträger nach Anspruch 12, worin jedes Steuerungsmittel nach einem vorprogrammierten Verfahren arbeitet, zum Verschlüsseln und Entschlüsseln der Kommunikation zum und von dem entsprechenden ditigalen Kassierer.

14. Ein digitaler Werteinheitenträger nach Anspruch 12, worin die Steuerungsmittel die Speicher der digitaler Werteinheit nach einem vorprogrammierten Verfahren steuern, basierend auf innerhalb der Kommunikationen verschlüsselter Informationen mit anderen Werteinheitträgern und vorbestimmten vertrauenswürdigen Dritten.

15. Ein digitaler Werteinheitträger nach einem der Ansprüche 11 bis 14, worin der Betrag der digitalen Werteinheit innerhalb des sicheren digitalen Werteinheit-Handhabungsbereichs (12) konstant bleibt, ausgenommen wo die digitale Werteinheit zu dem sicheren digitalen Werteinheit-Handhabungsbereichs durch eine Quelle eines vorbestimmten vertrauenswürdigen Dritten (22) hinzugefügt wird, oder die digitale Werteinheit von dem sicheren digitalen Werteinheit-Handhabungsbereichs durch eine Senke eines vertrauenswürdigen Dritten (24) entfernt wird.

16. Ein digitaler Werteinheitträger nach Anspruch 15, worin die eine oder mehrere vertrauenswürdige Autoritäten (18) den Werteinheitträger (DCH1, DCH2) mit einem Entschlüsselungsschlüssel zur Verwendung zum Entschlüsseln verschlüsselter Kommunikation mit anderen Werteinheitträgern versorgt.

17. Ein Verfahren zum Austausch von digitalen Werteinheiten mit den Schritten:
Versorgen eines sicheren digitalen Werteinheit-Handhabungsbereichs (12), umfassend eine Vielzahl von manipulationssicheren elektronischen Werteinheitträgern (DTH1, DTH2), jeder Werteinheitträger hat die Fähigkeit Informationen bezüglich des Transfers der digitalen Werteinheit zu bearbeiten und zu speichern;
jeder der Werteinheitträger kommuniziert mit einem entsprechenden vorbestimmten vertrauenswürdigen Dritten (18), um einen Entschlüsselungsschlüssel zu erhalten;
ein erster der Werteinheitträger (DTH1) kommuniziert mit einem zweiten der Werteinheitträger (DTH2) durch einen Austausch von einer oder mehrerer verschlüsselter Nachrichten, worin der erste den entsprechenden Entschlüsselungsschlüssel bezog und der zweite Werteinheitträger die Entschlüsselung der verschlüsselten Nachricht ermöglicht, gesendet durch den anderen Werteinheitträger, worin eine der verschlüsselten Nachrichten einen Betrag der digitalen Werteinheit, die von dem ersten Werteinheitträger zu dem zweiten Werteinheitträger transferiert werden soll, beinhaltet;
Übermitteln des Betrags der digitalen Werteinheit gemäß der den Betrag beinhaltenden verschlüsselten Nachricht;
**dadurch gekennzeichnet, dass**
es ferner mit dem Schritt einer ersten vertrauenswürdigen Autorität, die DTH1 mit einem ersten vertraulichen Schlüssel (Prk1) versorgt , korreliert zu einer Identifikation ID1 der DTH1, und geeignet zum Entschlüsseln einer mit einem öffentlichen Schlüssel verschlüsselten Nachricht, abgeleitet von der Identifikation ID1 des DTH1 und generiert durch den DTH2, und die DTH2 mit einem zweiten vertrauenswürdigen Schlüssel (Prk2) versorgt, korreliert zu einer Identifikation ID2 des DTH2 und geeignet zum Entschlüsseln einer mit einem öffentlichen Schlüssel verschlüsselten Nachricht, abgeleitet von der Identifikation ID2 des DTH2 und generiert durch den DTH1.

18. Ein Verfahren nach Anspruch 17, worin der erste vertrauenswürdige Schlüssel (Prk1) geeignet ist zum Entschlüsseln einer mit einem öffentlichen Schlüssel verschlüsselten Nachricht, abgeleitet von ID1 und einem temporalen Wert.

19. Ein Verfahren nach Anspruch 17, worin der zweite vertrauenswürdige Schlüssel (Prk2) geeignet ist zum Entschlüsseln einer mit einem öffentlichen Schlüssel verschlüsselten Nachricht, abgeleitet von ID2 und einem temporalen Wert.

20. Ein Verfahren nach einem der Ansprüche 17 bis 19,worin das Verfahren den Schritt des Versorgens des DTH2 mit einem symmetrischen Schlüssel beinhaltet, geeignet zum Verschlüsseln einer Nachricht, das durch Verwenden des symmetrischen Schlüssels entschlüsselt werden kann oder einem Entschlüsselungsschlüssel, abgeleitet von dem symmetrischen Schlüssel (nachstehend symmetrischer Entschlüsselungsschlüssel).

21. Ein Verfahren nach Anspruch 20, worin der symmetrische Schlüssel permanent in DTH2 gespeichert ist.

22. Ein Verfahren nach Anspruch 20, worin der symmetrische Schlüssel durch DTH2 generiert wird.

23. Ein Verfahren nach einem der Ansprüche 21 oder 22, worin der symmetrische Entschlüsselungsschlüssel permanent in dem Werteinheitträger (DCH1, DCH2) gespeichert ist.

24. Ein Verfahren nach einem der Ansprüche 21 oder 22, worin der symmetrische Entschlüsselungsschlüssel durch DTH2 generiert wird.

25. Ein Verfahren nach einem der Ansprüche 17 bis 24, worin das Verfahren den Schritt des Versorgens des DTH2 mit ID1 vom DTH1 beinhaltet.

26. Ein Verfahren nach einem der Ansprüche 17 bis 25, worin das Verfahren ferner den Schritt des von DTH2 verschlüsselten symmetrischen Schlüssels beinhaltet und ID2 einen öffentlichen Schlüssel verwendet, abgeleitet von ID1, um eine erste verschlüsselte Nachricht bereit zu stellen.

27. Ein Verfahren nach Anspruch 26, worin der öffentliche Schlüssel auch von einem temporalen Wert abgeleitet ist.

28. Ein Verfahren nach einem der Ansprüche 26 oder 27, worin DTH2 DTH1 mit der ersten verschlüsselten Nachricht versorgt.

29. Ein Verfahren nach Anspruch 28, worin das Verfahren ferner den Schritt beinhaltet, worin DTH1 den ersten vertrauenswürdigen Schlüssel (Prk1) zum Entschlüsseln der ersten verschlüsselten Nachricht verwendet, um den symmetrischen Schlüssel und ID2 zu erhalten.

30. Ein Verfahren nach Anspruch 29, worin DTH1 ID2 angezeigt und den Betrag der Werteinheit, der zum DTH2 transferiert werden soll.

31. Ein Verfahren nach Anspruch 30, worin DTH1 die Bestätigung erhält, mit dem Transfer des Betrags der digitalen Werteinheit fortzufahren.

32. Ein Verfahren nach Anspruch 31, worin der Betrag der digitalen Werteinheit mit einem von ID2 abgeleiteten öffentlichen Schlüssel verschlüsselt ist.

33. Ein Verfahren nach Anspruch 32, worin der öffentliche Schlüssel auch von einem temporalen Wert abgeleitet ist.

34. Ein Verfahren nach Anspruch 33, worin der Entschlüsselungsschlüssel zum Entschlüsseln der von DTH1 an DTH2 gesendeten verschlüsselten Nachricht verwendet wird, um eine zweite verschlüsselte Nachricht zu erhalten.

35. Ein Verfahren nach Anspruch 34, worin DTH2 den symmetrischen Entschlüsselungsschlüssel zum Entschlüsseln der zweiten verschlüsselten Nachrichtverwendet, um die zu übermittelnde digitale Werteinheit zu erhalten.

36. Ein Verfahren nach Anspruch 35, worin DTH2 den Betrag der übermittelten digitalen Werteinheit anzeigt.

37. Ein Verfahren nach einem der Ansprüche 35 oder 36, DTH2 nimmt den Empfang der digitalen Werteinheit an DTH1 zur Kenntnis.

38. Ein Verfahren nach Anspruch 37, worin DTH1 den Empfang anzeigt.

39. Ein Verfahren nach einem der Ansprüche 17 bis 38, worin die digitale Werteinheit (DCH1, DCH2) für den Transfer einer Währung ist, die Werteinheit beinhaltet einen Betrag einer transferierten Währung, worin der Transfer der digitalen Werteinheit nach der verschlüsselten Nachricht das Hinzufügen des Betrags zu einem Währungsspeicher in dem zweiten Werteinheitträger beinhaltet und das Einbehalten des Betrags von einem Währungsspeicher in dem ersten Werteinheitträger.

## Revendications

1. Système de transfert sécurisé de jetons numériques par des moyens électroniques, le système comprenant :
un domaine de manipulation de jetons numériques sécurisé (12) comprenant une pluralité de porte-jetons (DCH1, DCH2) électroniques inviolables, chaque porte-jetons ayant la capacité de traiter et d'enregistrer des informations concernant le transfert de jetons numériques ;
des moyens (26) permettant auxdits porte-jetons (DCH1, DCH2) de communiquer à l'intérieur du domaine de manipulation de jetons numériques (12) avec d'autres porte-jetons,
des moyens (26) permettant auxdits porte-jetons (DCH1, DCH2) de communiquer à l'extérieur du domaine de manipulation de jetons numériques (12) uniquement avec des tiers de confiance prédéterminés (18, 20), y compris une ou plusieurs autorités de confiance (18) responsables de l'administration des questions de cryptage ;
des moyens (28) de cryptage et de décryptage de communications sécurisées entre des porte-jetons (DCH1, DCH2) à l'intérieur du domaine de manipulation de jetons numériques (12) et entre les porte-jetons et les tiers prédéterminés (18, 20) ;
de sorte qu'en utilisation, les transferts de jetons numériques peuvent être réalisés de façon sécurisée à l'intérieur du domaine de manipulation de jetons numériques (12), **caractérisé en ce que** chacun desdits porte-jetons (DCH1, DCH2) comporte une identification unique (ID1, ID2) et est muni d'une clé privée (PrK1, PrK2), en corrélation avec l'identification du porte-jetons (DCH1, DCH2) respectif et capable de décrypter un message crypté avec une clé publique dérivée de l'identification (ID1, ID2) du porte-jetons (DCH1, DCH2) respectif et générée par un autre porte-jetons.

2. Système selon la revendication 1, dans lequel les moyens (26) permettant auxdits porte-jetons (DCH1, DCH2) de communiquer à l'intérieur du domaine de manipulation de jetons numériques (12) ont la forme d'un caissier numérique qui réside dans chaque porte-jetons.

3. Système selon la revendication 1 ou 2, dans lequel les moyens (26) permettant auxdits porte-jetons (DCH1, DCH2) de communiquer à l'extérieur du domaine de manipulation de jetons numériques (12) ont la forme d'un caissier numérique qui réside dans le porte-jetons.

4. Système selon l'une quelconque des revendications 1 à 3, dans lequel les moyens (28) de cryptage et de décryptage des communications sécurisées ont la forme d'un moyen de commande résidant dans chaque porte-jetons.

5. Système selon la revendication 4, dans lequel chaque moyen de commande fonctionne selon un procédé préprogrammé de cryptage et de décryptage des communications vers et depuis le caissier numérique respectif.

6. Système selon la revendication 4, dans lequel le moyen de commande commande lès j jetons numériques de la mémoire selon un procédé préprogrammé basé sur des informations cryptées dans les communications avec les autres porte-jetons et les tiers de confiance prédéterminés.

7. Système selon l'une quelconque des revendications 1 à 6, dans lequel la quantité de jetons numériques à l'intérieur du domaine de manipulation de jetons numériques sécurisé (12) demeure constante, excepté lorsqu'un jeton numérique est ajouté au domaine de manipulation de jetons numériques sécurisé (12) par un tiers de confiance prédéterminé source (22), ou lorsqu'un jeton numérique est retiré du domaine de manipulation de jetons numériques sécurisé par un tiers de confiance récepteur (24).

8. Système selon la revendication 7, dans lequel une ou plusieurs autorités de confiance fournissent une clé de décryptage à chaque porte-jetons pour permettre le décryptage des communications cryptées avec d'autres porte-jetons.

9. Porte-jetons numérique comprenant au moins :
une mémoire inviolable (30) pour enregistrer les jetons numériques ;
des moyens de communication (26) pour permettre la communication à l'intérieur d'un domaine de manipulation de jetons numériques (12) uniquement avec un ou plusieurs autres porte-jetons pour le transfert de jetons numériques vers l'un desdits autres porte-jetons ;
des moyens de communication (26) pour permettre la communication à l'extérieur du domaine de manipulation de jetons numériques (12) uniquement avec des tiers de confiance prédéterminés (18, 20), y compris la communication pour la réception d'une clé de décryptage ;
des moyens (28) de cryptage et de décryptage de communications sécurisées avec des porte-jetons (DCH1, DCH2) à l'intérieur du domaine de manipulation de jetons numériques (12) et avec des tiers prédéterminés (18, 20) ;
des moyens de commande pour commander la mémoire des jetons numériques selon un procédé préprogrammé de communication cryptée avec d'autres porte-jetons (DCH1, DCH2) à l'intérieur du domaine de manipulation de jetons numériques (12) et avec des tiers de confiance prédéterminés (18, 20) pour garantir l'échange sécurisé de jetons numériques ; **caractérisé en ce qu'**il comporte une identification unique (ID1, ID2) et est muni d'une clé privée (PrK1, PrK2), en corrélation avec l'identification et capable de décrypter un message crypté avec une clé publique dérivée de l'identification (ID1, ID2) du porte-jetons et générée par un autre porte-jetons.

10. Porte-jetons numérique selon la revendication 9, dans lequel les moyens (26) permettant auxdits porte-jetons (DCH1, DCH2) de communiquer à l'intérieur du domaine de manipulation de jetons numériques (12) ont la forme d'un caissier numérique qui réside dans chaque porte-jetons.

11. Porte-jetons numérique selon la revendication 9 ou 10, dans lequel les moyens (26) permettant auxdits porte-jetons (DCH1, DCH2) de communiquer à l'extérieur du domaine de manipulation de jetons numériques (12) ont la forme d'un caissier numérique qui réside dans le porte-jetons.

12. Porte-jetons numérique selon l'une quelconque des revendications 9 à 11, dans lequel les moyens (28) de cryptage et de décryptage des communications sécurisées ont la forme d'un moyen de commande résidant dans chaque porte-jetons.

13. Porte-jetons numérique selon la revendication 12, dans lequel chaque moyen de commande fonctionne selon un procédé préprogrammé de cryptage et de décryptage des communications vers et depuis le caissier numérique respectif.

14. Porte-jetons numérique selon la revendication 12, dans lequel le moyen de commande commande les jetons numériques de la mémoire selon un procédé préprogrammé basé sur des informations cryptées dans les communications avec les autres porte-jetons et les tiers de confiance prédéterminés.

15. Porte-jetons numérique selon l'une quelconque des revendications 11 à 14, dans lequel la quantité de jetons numériques à l'intérieur du domaine de manipulation de jetons numériques sécurisé (12) demeure constante, excepté lorsqu'un jeton numérique est ajouté au domaine de manipulation de jetons numériques sécurisé par un tiers de confiance prédéterminé source (22), ou lorsqu'un jeton numérique est retiré du domaine de manipulation de jetons numériques sécurisé par un tiers de confiance récepteur (24).

16. Porte-jetons numérique selon la revendication 15, dans lequel une ou plusieurs autorités de confiance (18) fournissent une clé de décryptage au porte-jetons (DCH1, DCH2) pour permettre le décryptage des communications cryptées avec d'autres porte-jetons.

17. Procédé d'échange des jetons numériques comprenant les étapes suivantes :
la fourniture d'un domaine de manipulation de jetons numériques sécurisé (12) comprenant une pluralité de porte-jetons (DCH1, DCH2) électroniques inviolables, chaque porte-jetons ayant la capacité de traiter et d'enregistrer des informations concernant le transfert du jeton numérique ;
chacun des porte-jetons communiquant avec un tiers de confiance prédéterminé (18) correspondant pour obtenir une clé de décryptage ;
un premier des porte-jetons (DTH1) communiquant avec un second des porte-jetons (DTH2) par un échange d'un ou de plusieurs messages cryptés, dans lequel la clé de décryptage respective obtenue par le premier et le second porte-jetons permet le décryptage des messages cryptés envoyés par l'autre porte-jetons, dans lequel un des messages cryptés comprend une quantité de jetons numériques devant être transférée du premier porte-jetons au second porte-jetons ;
le transfert de la quantité de jetons numériques selon le message crypté comprenant la quantité ; **caractérisé en ce qu'**il comprend en outre l'étape consistant à ce qu'une première autorité de confiance fournisse au DTH1 une première clé privée (PrK1), en corrélation avec une identification ID1 du DTH1 et capable de décrypter un message crypté avec une clé publique dérivée de l'identification ID1 du DTH1 et générée par le DTH2, et fournisse au DTH2 une seconde clé privée (PrK2), en corrélation avec une identification ID2 du DTH2 et capable de décrypter un message crypté avec une clé publique dérivée de l'identification ID2 du DTH2 et générée par le DTH1.

18. Procédé selon la revendication 17, dans lequel la première clé privée (PrK1) est capable de décrypter un message crypté avec une clé publique dérivée de ID1 et une valeur temporelle.

19. Procédé selon la revendication 17, dans lequel la seconde clé privée (PrK2) est capable de décrypter un message crypté avec une clé publique dérivée de ID2 et une valeur temporelle.

20. Procédé selon l'une quelconque des revendications 17 à 19, dans lequel le procédé comprend l'étape consistant à fournir au DTH2 une clé symétrique capable de crypter un message qui peut être décrypté à l'aide de la clé symétrique ou d'une clé de décryptage dérivée de la clé symétrique (ci-après clé de décryptage symétrique).

21. Procédé selon la revendication 20, dans lequel la clé symétrique est enregistrée en permanence dans DTH2.

22. Procédé selon la revendication 20, dans lequel la clé symétrique est générée par DTH2.

23. Procédé selon la revendication 21 ou 22, dans lequel la clé de décryptage symétrique est enregistrée en permanence dans le porte-jetons (DCH1, DCH2).

24. Procédé selon la revendication 21 ou 22, dans lequel la clé de décryptage symétrique est générée par DTH2.

25. Procédé selon l'une quelconque des revendications 17 à 24, dans lequel le procédé comprend l'étape consistant à ce que DTH1 fournisse ID1 à DTH2.

26. Procédé selon l'une quelconque des revendications 17 à 25, dans lequel le procédé comprend en outre l'étape consistant à ce que DTH2 crypte la clé symétrique et ID2 à l'aide d'une clé publique dérivée de ID1 pour fournir un premier message crypté.

27. Procédé selon la revendication 26, dans lequel la clé publique est également dérivée d'une valeur temporelle.

28. Procédé selon la revendication 26 ou 27, dans lequel DTH2 fournit le premier message crypté à DTH1.

29. Procédé selon la revendication 28, dans lequel le procédé comprend en outre l'étape consistant à ce que DTH1 utilise la première clé privée (PrK1) pour décrypter le premier message crypté pour obtenir la clé symétrique et ID2.

30. Procédé selon la revendication 29, dans lequel DTH1 affiche ID2 et la quantité de jetons à transférer vers DTH2.

31. Procédé selon la revendication 30, dans lequel DTH1 reçoit la confirmation de procéder au transfert de la quantité de jetons numériques.

32. Procédé selon la revendication 31, dans lequel la quantité de jetons numériques est cryptée avec une clé publique dérivée de ID2.

33. Procédé selon la revendication 32, dans lequel la clé publique est également dérivée d'une valeur temporelle.

34. Procédé selon la revendication 33, dans lequel la clé de décryptage est utilisée pour décrypter le message crypté envoyé de DTH1 à DTH2 pour obtenir un second message crypté.

35. Procédé selon la revendication 34, dans lequel DTH2 utilise la clé de décryptage symétrique pour décrypter le second message crypté pour obtenir le jeton numérique devant être transféré.

36. Procédé selon la revendication 35, dans lequel DTH2 affiche la quantité de jetons numériques transférée.

37. Procédé selon la revendication 35 ou 36, dans lequel DTH2 accuse réception du jeton numérique à DTH1.

38. Procédé selon la revendication 37, dans lequel DTH1 affiche la réception.

39. Procédé selon l'une quelconque des revendications 17 à 38, dans lequel le jeton numérique (DCH1, DCH2) est destiné au transfert d'une monnaie, le jeton comprenant une quantité de monnaie transférée, dans lequel le transfert du jeton numérique selon le message crypté comprend l'ajout de la quantité à une mémoire de monnaie dans le second porte-jetons et la déduction de la quantité à partir d'une mémoire de monnaie dans le premier porte-jetons.
